# EUROPÄISCHE PATENTANMELDUNG

(11) **EP 4 261 491 A1**
(43) Veröffentlichungstag der Anmeldung: **18.10.2023**
(21) Anmeldenummer: 23166926.8
(22) Anmeldetag: 06.04.2023
(51) Int. Cl.: F41G 7/22, G05D 1/10

(54) **VERFAHREN ZUM LENKEN EINES ABFANGFLUGKÖRPERS**

(30) Priorität: 13.04.2022 DE 102022001287
(71) Anmelder: Diehl Defence GmbH & Co. KG, 88662 Überlingen (DE)
(72) Erfinder: Kuhn, Thomas, 88633 Heiligenberg (DE); Ganser, Michael, 88662 Überlingen (DE)
(74) Vertreter: Diehl Patentabteilung

(57) **Zusammenfassung**

Die Erfindung betrifft ein Verfahren zum Lenken eines durch ein Triebwerk (4) angetriebenen lenkfähigen Abfangflugkörpers (2) zum Abfangen eines manövrierfähigen Luftziels (14) innerhalb einer Midcourse-Phase des Abfangens.

Um die Robustheit der Zielerfassung zu erhöhen, wird vorgeschlagen, dass in einem Planungszyklus
a) eine Prädiktion einer möglichen Flugbahn (22) des Abfangflugkörpers (2) zum Luftziel (14) mit einem Prädiktor (38) erstellt wird,
b) eine zukünftige Annäherung (24) des Abfangflugkörpers (2) ans Luftziel (14) auf dieser Flugbahn (22) anhand des Prädiktors (38) bestimmt und bewertet (52) wird, wobei in die Bewertung ein Sichtbarkeitsparameter mit einfließt, der einen Aspekt der voraussichtlichen Sichtbarkeit des Luftziels (14) durch einen Sucher (12) des Abfangflugkörpers (2) angibt,
c) weitere Prädiktionen möglicher Flugbahnen (22) des Abfangflugkörpers (2) zum Luftziel (14) berechnet werden durch mehrfache Variationen (56) von Steuergrößen des Abfangflugkörpers (2), wobei die resultierenden Annäherungen (24) des Abfangflugkörpers (2) ans Luftziel (14) jeweils bewertet werden (52), und
d) anhand der Bewertungen eine der Flugbahnen (22) des Abfangflugkörpers (2) ausgewählt wird, und
ein erstes Teilstück (28) dieser Flugbahn (22) abgeflogen wird und der Planungszyklus mehrfach für nachfolgende Teilstücke (28) wiederholt wird.

## Beschreibung

Die Erfindung betrifft ein Verfahren zum Lenken eines durch ein Triebwerk angetriebenen lenkfähigen Abfangflugkörpers zum Abfangen eines manövrierfähigen Luftziels innerhalb einer Midcourse-Phase des Abfangens.

Angreifende Flugzeuge oder Flugkörper werden häufig durch Abfangflugkörper bekämpft. Nach dem Start des Abfangflugkörpers steigt dieser in einer Startphase zunächst auf und beginnt seinen Flug grob in Richtung zum Ziel hin. Eine anschließende Midcourse-Phase dient dazu, den Großteil der Distanz zum Ziel zu überwinden und in dessen Nähe zu kommen, insbesondere so nah, dass bordeigene Systeme des Abfangflugkörpers ausreichen, um das Ziel in einem sich an die Midcourse-Phase anschließenden Endgame zielgenau anfliegen zu können.

In der US 8,106,340 B1 ist beschrieben, wie ein predicted intercept point (PIP) berechnet wird. Die Lenkung des Abfangflugkörpers wird so gesteuert, dass er den PIP anfliegt. Dieses Verfahren wird während des Midcourse repetitiv wiederholt, sodass der Abfangflugkörper während seines Flugs zum Ziel ständig korrigiert wird.

Aus der DE 10 2010 032 281 A1 ist es bekannt, eine voraussichtliche Flugbahn des Ziels bei der Steuerung des Abfangflugkörpers mit einzubeziehen und diesen in Abhängigkeit von dieser Flugbahn zu steuern. Anstelle der üblichen Proportionalnavigation wird die Zero Effort Miss (ZEM)-Lenkung verwendet.

Es ist eine Aufgabe der Erfindung, einen Abfangflugkörper und ein Verfahren zum Lenken eines Abfangflugkörpers innerhalb einer Midcourse-Phase anzugeben, das hinsichtlich der Robustheit der Zielerkennung verbessert ist.

Die auf das Verfahren gerichtete Aufgabe wird gelöst durch ein Verfahren zum Lenken eines durch ein Triebwerk angetriebenen lenkfähigen Abfangflugkörpers zum Abfangen eines manövrierfähigen Luftziels innerhalb einer Midcourse-Phase des Abfangens, bei dem erfindungsgemäß in einem Planungszyklus
a) eine Prädiktion einer möglichen Flugbahn des Abfangflugkörpers zum Luftziel mit einem Prädiktor erstellt wird,
b) eine zukünftige Annäherung des Abfangflugkörpers ans Luftziel auf dieser Flugbahn anhand des Prädiktors bestimmt und bewertet wird, wobei in die Bewertung ein Sichtbarkeitsparameter mit einfließt, der einen Aspekt der voraussichtlichen Sichtbarkeit des Luftziels durch einen Sucher des Abfangflugkörpers angibt,
c) weitere Prädiktionen möglicher Flugbahnen des Abfangflugkörpers zum Luftziel berechnet werden durch mehrfache Variationen von Steuergrößen des Abfangflugkörpers, wobei die resultierenden Annäherungen des Abfangflugkörpers ans Luftziel jeweils bewertet werden, und
d) anhand der Bewertungen eine der Flugbahnen des Abfangflugkörpers ausgewählt wird, und
ein erstes Teilstück dieser Flugbahn abgeflogen wird und der Planungszyklus mehrfach für nachfolgende Teilstücke wiederholt wird.

Die Erfindung geht von der Überlegung aus, dass die Robustheit der Flugkörperlenkung, also eine zum Luftziel führende Lenkung, auch wenn die Annahmen von der Realität abweichen, erhöht werden kann durch die Anwendung der Model Predictive Control (MPC) (Modellprädiktive Regelung) auf die Lenkung des Abfangflugkörpers. Bei der MPC kann ein dynamisches, zeitdiskretes Modell der Flugsteuerung verwendet werden, um die zukünftige Lenkung des Abfangflugkörpers in Abhängigkeit von freien Steuerparametern zur Lenkung des Abfangflugkörpers zu berechnen. Dies ermöglicht die Berechnung von Steuerparametern hoher Güte zur Lenkung. Die Güte kann anhand einer Gütefunktion oder Kostenfunktion, die zumindest ein Gütekriterium enthält, definiert werden. Die Anwendung der MPC auf die Lenkung des Abfangflugkörpers kann als Model Predictive Guidance (MPG) bezeichnet werden.

Die Eingangsgrößen der Lenkung, die die Größen der Steuerparameter der Lenkung enthalten, also die Steuergrößen, können in einem mathematischen Deskriptor, dem Prädiktor, zusammengefasst werden. Der Prädiktor enthält also neben einer Funktion zur Berechnung der Flugbahn auch die Steuergrößen der Lenkung des Abfangflugkörpers. Mittels des Prädiktors lässt sich der Flug des Abfangflugkörpers vorhersagen. Dieser vorausberechnete Flug muss am Anfang des Verfahrens nicht besonders gut sein, da die Steuergrößen variiert und im Laufe des Verfahrens verbessert werden. Hierdurch wird die Flugbahn zum Luftziel, also in Richtung zum Luftziel, verbessert. Durch die Variation der Steuergrößen liegen - ausgehend vom gleichen Anfangspunkt der Berechnung, der der aktuelle Flugpunkt des Abfangflugkörpers sein kann - mit dem Prädiktor mehrere verschiedene Flugbahnen zum Luftziel vor. Anhand von vorgegebenen Gütekriterien können die verschiedenen Flugbahnen bewertet werden und die Flugbahn mit der besten Güte kann ausgewählt werden. Die dieser Flugbahn zugrundeliegenden Steuergrößen können zum Lenken des Abfangflugkörpers verwendet werden. Dieser Planungszyklus mit seinen vielen möglichen Flugbahnen wird im Laufe des Flugs des Abfangflugkörpers vielfach wiederholt, sodass der Flug nach jedem Teilstück des Flugs korrigiert werden kann.

Durch das Einbeziehen eines Sichtbarkeitsparameters, der einen Aspekt der voraussichtlichen Sichtbarkeit des Luftziels durch einen Sucher des Abfangflugkörpers angibt, in die Bewertung kann die Robustheit der Luftzielerkennung verbessert werden. Fliegt der Abfangflugkörper beispielsweise ein angetriebenes Luftziel direkt von vorne an, so ist die IR-Signatur des Abgasstrahls des Luftziels schwerer und damit später erkennbar, als wenn der Abfangflugkörper das Luftziel schräg von vorne anfliegt. Denn erstens ist die Silhouette des Abgasstrahls von vorne kleiner als von der Seite und zweitens wird der Abgasstrahl teilweise von der Silhouette des Luftziels verdeckt. Das Erkennen der IR-Signatur des Abgasstrahls ist jedoch notwendig für das Auffassen des Luftziels aus der Ferne durch einen IR-Sucher. Daher wird bei einem IR-Sucher ein Anflug von der Seite besser bewertet werden, als ein Direktanflug von vorne.

Generell kann sich die Bewertung des Sichtbarkeitsparameters auf einen Zeitpunkt oder einen Abstand des Abfangflugkörpers vom Luftziel beziehen, zweckmäßigerweise auf den voraussichtlichen Beginn des Endgames, der beim voraussichtlichen Zeitpunkt bzw. Abstand des Aufschaltens des Suchers auf das Ziel liegen kann. Anstelle des Zeitpunkts bzw. Abstands kann auch ein Zeitbereich bzw. Abstandsbereich gewählt werden, in dem die voraussichtliche Aufschaltung des Suchers auf das Ziel liegt, da der genaue Aufschaltzeitpunkt bzw. Aufschaltabstand im Voraus nicht bekannt ist.

Das Triebwerk des Abfangflugkörpers ist zweckmäßigerweise ein Raketentriebwerk, insbesondere ein Festbrennstofftriebwerk. Das Ziel kann ein Marschflugkörper, ein ballistischer Flugkörper, ein Lenkflugkörper, oder dergleichen sein. Der Flug des Abfangflugkörpers kann in eine Startphase, eine Midcourse-Phase und ein Endgame unterteilt sein. Die Midcourse-Phase kann mit einem Aufschalten eines Suchers des Abfangflugkörpers auf das Luftziel beendet sein.

Ein Durchlauf eines Planungszyklus kann die Schritte a) bis d) umfassen. Mehrere Durchläufe bilden einen Planungszyklus. Mehrere Planungszyklen können in einen MPG-Zyklus zusammengefasst werden. In einem Planungszyklus werden viele mögliche Flugbahnen - insbesondere ausgehend vom aktuellen Flugpunkt - berechnet und eine von ihnen wird ausgewählt und als Grundlage der Steuerung des Flugs des Abfangflugkörpers verwendet. Der Planungszyklus wird im Laufe des Flugs wiederholt, sodass eine repetitive zeitliche Wiederholung der Variationen der Flugbahn erfolgt, insbesondere von jeweils anderen aktuellen Flugpunkten des Abfangflugkörpers. Das Variieren der berechneten Flugbahn bzw. der Steuergrößen des Prädiktors und das Aussuchen der geeignetsten Flugbahn entspricht einem Optimierungsverfahren zur Optimierung der Flugkörperflugbahn. Es hierbei jedoch nicht notwendig, dass das Optimum der Flugbahn erreicht wird, denn bereits eine Verbesserung gegenüber einer anfänglichen Flugbahn oder ein temporäres Optimum, wie die temporär beste verfügbare Flugbahn, ist ausreichend.

In einem Planungszyklus beginnen die vielen Flugbahnen zweckmäßigerweise jeweils vom aktuellen Flugpunkt, der der reale, aktuelle Aufenthaltspunkt des Flugkörpers zu Beginn, während oder am Ende des Planungszyklus sein kann oder am Anfang oder Ende eines Teilstücks der Flugbahn liegen kann. Der Flugpunkt kann ein räumlicher, mathematischer Start eines Berechnungsvorgangs sein, wie ein theoretischer Ort des Flugkörpers, beispielsweise der Ausgangspunkt eines Vektors. Im Planungszyklus werden so mehrere Flugbahnen beginnend vom gleichen aktuellen Flugpunkt berechnet. Da die Berechnung etwas Zeit in Anspruch nimmt, währenddessen der Flugkörper durch den realen Raum fliegt, der Startpunkt der Bahnen jedoch identisch sein sollte, muss der theoretische Aufenthaltsort des Flugkörpers bzw. der mathematische Start der Berechnung nicht exakt im realen aktuellen Aufenthaltsort des Flugkörpers liegen. Er kann generell ein rechnerischer Ort sein, insbesondere, wenn gemessene Koordinaten des Flugkörpers nicht verfügbar sind. Neben dem Ort kann der aktuelle Flugpunkt auch die aktuelle Flugrichtung, die aktuelle Fluggeschwindigkeit und/oder aktuelle Beschleunigung bzw. den Vorschub des Flugkörpers enthalten.

Der Prädiktor kann eine oder mehrere Funktionen und mathematische Größen enthalten, wie Skalare, Vektoren, und/oder andere Daten, die eine Flugbahn mathematisch beschreiben. Der Prädiktor kann eine Anzahl von Differentialgleichungen enthalten, die beispielsweise numerisch mittels Runge-Kutta-Integration gelöst werden. Der Prädiktor kann auch einen inertialen Zustand, wie den Flugpunkt, enthalten, sodass eine Flugbahn ausgehend vom inertialen Zustand anhand der Größen mathematisch beschrieben wird. Der inertiale Zustand muss jedoch nicht Bestandteil des Prädiktors sein, sondern kann auch zusätzlich herangezogen werden zur Beschreibung der Bahn. Die Größen können Steuergrößen, also Größen von Steuerparametern des Flugkörpers sein. Die Steuerparameter sind zweckmäßigerweise Parameter, die einen Einfluss auf den Flug des Flugkörpers haben und steuerbar sind, wie Querbeschleunigungen in zwei zweckmäßigerweise orthogonale Raumrichtungen und insbesondere auch ein Startzeitpunkt einer zweiten Triebwerksstufe und/oder ein Vorschub des Triebwerks.

Um eine vorteilhafte Flugbahn zu ermitteln, werden weitere mögliche Flugbahnen des Flugkörpers zum Luftziel ausgehend vom gleichen aktuellen Flugpunkt prädiziert. Hierfür werden Steuergrößen des Flugkörpers mehrfach verändert. Die Steuerparameter an sich können in der Variation gleich bleiben, nur ihre Steuergrößen, wie Werte, Vektoren oder Matrizen werden verändert. Mit jeder Flugbahn wird eine Annäherung des Flugkörpers ans Luftziel beschrieben. Diese wird bewertet. Es kann die Annäherung insgesamt bewertet werden oder die Annäherung in einem vorbestimmten Annäherungsgebiet, z.B. in einem vorbestimmten Radius um das Luftziel. Das Annäherungsgebiet kann ein Bereich um das Luftziel sein, in dem eine Änderung der Lenkstrategie des Flugkörpers sinnvoll sein kann. Beispielsweise wird die Grenze des Annäherungsgebiets um das Luftziel von den Orten gebildet, an denen ein Sucher des Flugkörpers auf das Luftziel voraussichtlich aufschalten kann oder aufschaltet. Nun kann der Flugkörper durch den Sucher gelenkt werden. In diesem Fall wäre das Annäherungsgebiet das Gebiet des Endgame.

Es kann alternativ oder zusätzlich die Annäherung in einem Punkt bewertet werden, z.B. in einem nahestem Annäherungspunkt der Flugbahn. Der naheste Annäherungspunkt kann der Aufschlagpunkt des Flugkörpers im Luftziel sein. Es ist jedoch nicht notwendig, dass sich Flugkörper und Luftziel exakt treffen, sodass der naheste Annäherungspunkt der Punkt der Flugbahn ist, an dem die Annäherungsgeschwindigkeit des Flugköpers zum Luftziel einen Nullpunkt durchtritt und danach negativ wird, der Flugkörper sich also wieder vom Luftziel entfernt. Der naheste Annäherungspunkt der Flugbahn ist unabhängig davon, ob der Flugkörper an diesem Punkt das Luftziel bekämpfen kann oder nicht. Denn gerade am Anfang des Variationsverfahrens wird der naheste Annäherungspunkt eher weit entfernt vom Luftziel sein.

Die Bewertung kann eine oder mehrere Flugeigenschaften des Flugköpers betreffen, die anhand von Gütekriterien bewertet werden. Eine Bewertung der Annäherung führt zu einem Güteergebnis, wie einem Gütevektor, einem Gütewert oder einer Gütefunktion. Die Gütekriterien können in einer Gütefunktion oder Kostenfunktion zusammengefasst werden, sodass den mehreren Gütekriterien verschiedene Gewichtungen in der Kostenfunktion gegeben werden können. Anhand der Kostenfunktion mit ihren mehreren Gütekriterien kann unter Verwendung der Flugeigenschaften ein Güteergebnis bzw. eine Güte berechnet werden. Diese dient der Auswahl der Flugbahn, beispielsweise der mit dem besten Güteergebnis. Das kann die Flugbahn mit den geringsten Kosten sein, wobei Kosten bzw. Güteergebnis durch die Kostenfunktion bestimmt werden. Diese Flugbahn kann nun entlang eines ersten bzw. nächstfolgenden Teilstücks abgeflogen werden. Das bedeutet, dass die Steuergrößen des Prädiktors dieser Flugbahn zur Lenkung des Flugkörpers verwendet werden, zumindest dieses Teilstück weit.

Die Gütekriterien können Sichtbarkeitskriterien umfassen, die jeweils einen Aspekt der voraussichtlichen Sichtbarkeit des Luftziels durch einen Sucher des Abfangflugkörpers angibt. Die Sichtbarkeitskriterien können in einem Sichtbarkeitsparameter zusammengefasst werden, der somit einen oder mehrere Aspekte der voraussichtlichen Sichtbarkeit des Luftziels durch einen Sucher des Abfangflugkörpers enthält und der in die Bewertung mit einfließt.

In einer vorteilhaften Ausführungsform der Erfindung umfasst der Sichtbarkeitsparameter den Abstand zwischen Abfangflugkörper und Luftziel, ab dem der Sucher voraussichtlich in der Lage ist, das Luftziel als solches zu erfassen. Je früher der Sucher das Luftziel erfassen kann, also auf das Ziel aufschalten kann, desto besser kann die Bewertung sein.

Für die Sichtbarkeit des Luftziels vom Sucher kann ein Winkel zwischen dem Luftziel und der Sichtlinie vom Abfangflugkörper zum Luftziel ausschlaggebend sein. In Bezug auf das Luftziel kann dessen Flugachse oder Flugrichtung verwendet werden. Dem Winkel kann eine Funktion zugeordnet sein, der den Werten des Winkels verschiedene Kosten oder Bewertungen zuschreibt.

Die Funktion kann den Besonderheiten einer Signatur des Luftziels angepasst sein oder Stufen, insbesondere nur eine Stufe enthalten, sodass die Bewertung abfällt, wenn der Winkel unter einen Mindestwinkel fällt. Es kann insofern festgelegt sein, dass der Winkel einen Mindestwinkel nicht unterschreiten darf, das heißt, dass dann die Bewertung sprunghaft abfällt. Der Mindestwinkel darf zumindest nicht innerhalb eines festgelegten oder während des Anflugs ermittelten Bahnabschnitts bzw. Teilstücks der Flugbahn, auf dem sich der Abfangflugkörper real befindet, unterschritten werden, beispielsweise in einem Teilstück, in dem das Erfassen des Ziels durch den Sucher des Abfangflugkörpers erfolgen soll.

Ebenfalls von Bedeutung für die Sichtbarkeit kann der Typ des Luftziels sein. Insofern ist es vorteilhaft, wenn der Sichtbarkeitsparameter den Typ des Luftziels in Bezug zur Sichtbarkeit dieses Typs umfasst. Wenn das Luftziel einen heißen Abgasstrahl aufweist, ist ein Erfassen von der Seite in einem größeren Abstand möglich, als direkt von vorne. Ist das Luftziel jedoch nicht angetrieben und beispielsweise sehr schnell, so kann die sichtbarste Wärmesignatur an der Spitze des Luftziels auftreten, sodass ein Anflug direkt von vorne höher bewertet werden sollte, als von der Seite. Es ist daher insbesondere vorteilhaft, wenn der Winkel zwischen der Sichtlinie und dem Luftziel in Abhängigkeit von der Art oder dem Typ des Luftziels bewertet wird, beispielsweise nach der Geschwindigkeit des Luftziels aufgeteilt oder in unangetriebene, ballistische oder angetriebene Luftziele.

Nicht nur die relative Sichtrichtung des Abfangflugkörpers zur Flugrichtung des Luftziels kann relevant für die Sichtbarkeit des Luftziels sein, sondern auch die absolute Sichtrichtung des Abfangflugkörpers auf das Luftziel, insbesondere eine auf die Vertikale bezogene Sichtrichtung, also beispielsweise ob das Luftziel von oben oder unten angeflogen wird. Denn zum Auffassen des Luftziels ist auch der Bildhintergrund relevant, also beispielsweise ein blauer Himmel, gegen den die Erfassung einfacher ist, als gegen einen heißen Wüstenuntergrund mit einer starken Temperaturkörnung im Wärmebild.

Mit gleichem Vorteil ist es zweckmäßig, dass der Sichtbarkeitsparameter einen Bildhintergrund hinter dem Luftziel aus Sicht des Abfangflugkörpers umfasst. Während die Sichtrichtung bereits einen Aufschluss über einen möglichen Bildhintergrund geben kann und relativ leicht zu bewerten ist, ist die konkrete Bewertung des Bildhintergrunds besser, jedoch auch komplexer. Der Bildhintergrund kann aus vorbekannten Bilddaten, z.B. aus früheren Luftaufnahmen, zur Bewertung herangezogen werden.

Die Sichtbarkeit des Luftziels ist abhängig von der Beschaffenheit der Atmosphäre zwischen Abfangflugkörper und Luftziel. Es ist daher vorteilhaft, wenn die Beschaffenheit der Atmosphäre zwischen Abfangflugkörper und Luftziel in die Bewertung eingeht. Ein Parameter kann die Staubfracht in der Luft zwischen Abfangflugkörper und Luftziel sein. Ein weiterer Parameter für die Beschaffenheit kann die Flughöhe des Luftziels sein, denn diese legt die Luftdichte um das Flugziel - abgesehen von leichten Wetterschwankungen - fest. Je tiefer das Luftziel fliegt, desto dichter ist die Luft und desto schlechter ist die IR-Strahlung für den Sucher sichtbar.

Auch ein Wetterparameter oder ein Wolkenparameter kann die Sichtbarkeit beeinflussen, wie eine Wetterbedingung, z.B. die relative Luftfeuchtigkeit, insbesondere Regen, oder Wolken zwischen Abfangflugkörper und Luftziel. Weiter ist die Temperatur der Atmosphäre oder eines Bildhintergrunds von Bedeutung. Daher kann der Sichtbarkeitsparameter eine Tageszeit und/oder Temperatur enthalten.

Sobald der Sucher zuverlässig das Luftziel erfassen kann, kann er auf das Luftziel aufschalten und der Abfangflugkörper kann unter Verwendung von Daten des Suchers gelenkt werden. Es ist jedoch im Vorhinein nicht immer bekannt, unter welchen Bedingungen das Luftziel zuverlässig erkennbar ist. Die Bewertung des Sichtbarkeitsparameters kann jedoch eine Hilfe sein. Ist die Sichtbarkeit schlecht bewertet, beispielsweise wegen Wolken oder einem störenden Bildhintergrund, kann die Bedingung des Aufschaltens dahingehend geändert werden, dass die Erkennung zuverlässiger sein muss, als bei guter Sichtbarkeit. Es ist daher vorteilhaft, wenn eine Bedingung des Aufschaltens des Suchers des Abfangflugkörpers auf das Luftziel von der Bewertung des Sichtbarkeitsparameters abhängig gemacht wird.

Zu Beginn des Midcourse-Flugs spielt die spätere Sichtbarkeit des Luftziels noch keine so große Rolle, zumindest dann, wenn der Abfangflugkörper auch später noch genügend Möglichkeiten hat, den Anflug zugunsten einer besseren Sichtbarkeit zu variieren. Es ist daher zweckmäßig, wenn die Gewichtung der Bewertung des Sichtbarkeitsparameters in der Bewertung der Annäherung im Laufe des Midcourse-Flugs erhöht wird, beispielsweise in einem oder mehreren Schritten, vorzugsweise ab einem bzw. mehreren vorgegebenen oder während des Flugs ermittelten Flugpunkten. Insbesondere ist es möglich, dass der Sichtbarkeitsparameter erst im Laufe des Midcourse-Flugs in die Bewertung aufgenommen wird, die Gewichtung also davor Null ist und dann angehoben wird. Es kann daher die Bewertung der Annäherung des Abfangflugkörpers ans Luftziel zunächst ohne Bewertung des Sichtbarkeitsparameters erfolgen, und ab einem vorgegebenen oder während des Flugs ermittelten Flugpunkt fließt der Sichtbarkeitsparameter in die Gesamtbewertung der Annäherung mit ein. Auch hier kann die Gewichtung im weiteren Verlauf des Midcourse noch erhöht werden. Hierdurch kann eine bessere Berechnungsstabilität erreicht werden und zudem eine stärkere Kontrolle über die Flugbahn.

In einer vorteilhaften Ausführungsform der Erfindung beschreibt der Prädiktor auch eine angenommene Flugbahn des Luftziels. Der Prädiktor kann also zusätzlich zur Flugbahn des Abfangflugkörpers auch eine angenommene Flugbahn des Luftziels enthalten, sodass er beide Bahnen beschreibt. Auf diese Weise kann eine Annäherung der beiden Flugkörper aneinander berechnet werden. Die Flugbahn des Luftziels bleibt zweckmäßigerweise während der vom aktuellen Flugpunkt ausgehenden Variation der Flugkörperflugbahnen gleich, sodass innerhalb des Planungszyklus mehrere Flugkörperflugbahnen mit jeweils einer gleichbleibenden Zielflugbahn entstehen. Im Laufe des realen Flugs des Abfangflugkörpers kann jedoch die angenommene Flugbahn des Luftziels variieren, sodass sich beispielsweise von Flugpunkt zu Flugpunkt die Daten der angenommenen Zielflugbahn verändern können, z.B. entsprechend neuer Zieldaten, die vom Boden, zum Beispiel von einem Feuerleitsystem ermittelt worden sein können. Im Übrigen können alle zur Prädizierung der Flugbahn des Flugkörpers beschriebenen Details auch auf die Prädizierung der Flugbahn des Luftziels angewendet werden.

Um dem Luftziel möglichst nahe zu kommen, sollte die zukünftige Flugbahn des Luftziels in den Planungszyklus mit einbezogen werden. Da die zukünftige Flugbahn des Luftziels nicht bekannt ist, können Hypothesen zur Flugbahn des Luftziels verwendet werden. Welche Hypothese verwendet wird, kann von der vergangenen Flugbahn des Luftziels abhängig gemacht werden. Bei einem Geradeausflug des Luftziels kann dieser weiterhin angenommen werden. Fliegt das Luftziel ein Ausweichmanöver, kann beispielsweise die Hypothese angenommen werden, dass das Ausweichmanöver bis zu einem Tail On-Flug fortgesetzt wird, also bis in Fluchtrichtung. Wird ein Wedeln erkannt, um den Miss des Flugkörpers zu vergrößern, kann auch dieses Manöver weiter in die Zukunft prädiziert werden. Meist ist die Hypothese jedoch nicht eindeutig ableitbar, sodass mehrere mögliche Flugbahnen des Luftziels infrage kommen. In einem solchen Fall ist es vorteilhaft, wenn mehrere angenommene Flugbahnen des Luftziels bestimmt werden und daraus eine theoretische Flugbahn des Luftziels abgeleitet wird, die in den Prädiktor eingeht. Die theoretische Flugbahn kann eine der angenommenen Flugbahnen sein, ein Median, ein geometrischer Schwerpunkt der angenommenen Flugbahnen oder nach anderen Gesichtspunkten gewählt werden. Werden mehrere angenommene Flugbahnen des Luftziels bestimmt, ist zudem vorteilhaft, wenn der Sichtbarkeitsparameter eine Sichtbarkeit des Luftziels in mehreren Annäherungsgebieten umfasst. Eine Flugbahn des Abfangflugkörpers kann dann eine Bewertung erhalten, die umso besser ist, auf je mehr Zielflugbahnen der Sucher das Luftziel ausreichend gut auffassen kann.

Die zukünftigen Annäherungen des Flugkörpers ans Luftziel auf den Flugbahnen des Planungszyklus werden bewertet, also zumindest ein Annäherungscharakteristikum jeder der betreffenden Flugbahnen. Die Bewertung einer Flugbahn kann unter Verwendung von einem oder mehreren der folgenden Gütekriterien durchgeführt werden:
- Der Miss oder naheste Abstand des Abfangflugkörpers zum Luftziel. Je kleiner der naheste Abstand ist, desto höher ist die Güte. Es ist vorteilhaft, wenn der naheste Abstand nicht absolut gemessen wird, sondern relativ zu einer anderen Größe. Beispielsweise kann er auf die Länge der Sichtlinie zum Luftziel normiert werden, sodass er absolut gesehen im Laufe des Flugs bei gleicher Bewertung abnimmt.
- Die Flugzeit vom aktuellen Flugpunkt zum nahesten Annäherungspunkt. Je kürzer die Flugzeit ist, desto höher ist die Güte.
- Die Fluggeschwindigkeit des Abfangflugkörpers im nahesten Annäherungspunkt. Je höher die Fluggeschwindigkeit ist, desto höher ist die Güte.
- Die Begegnungsgeometrie von Abfangflugkörper und Luftziel bei einem erwarteten Aufschaltpunkt oder in einem erwarteten Aufschaltbereich. Die Begegnungsgeometrie kann ausschlaggebend für die erfolgreiche Aufschaltung des Luftziels durch einen Sucher des Abfangflugkörpers sein.
- Das Einhalten einer vorbestimmten Gipfelhöhe, beispielsweise um nicht frühzeitig erkannt zu werden.

Generell können die Flugbahnen eines Planungszyklus an sich bewertet werden, wobei die Bewertung der zukünftigen Annäherung des Abfangflugkörpers ans Luftziel auf dieser berechneten Flugbahn ein Teil der Gesamtbewertung ist. Hierbei ist es vorteilhaft, wenn in eine Bewertung der Flugbahn der Lenkaufwand des Abfangflugkörpers entlang dieser Flugbahn eingeht. Je höher der Lenkaufwand ist, desto mehr Energie geht verloren, sodass die Bewertung schlechter ist. Zudem steht bei einem hohen Lenkaufwand weniger Lenkreserve für Verfolgungsmanöver zur Verfügung, was ebenfalls die Bewertung senkt.

Intensive Verfolgungsmanöver werden erst nahe am Luftziel notwendig. Das Aufrechterhalten einer größtmöglichen Lenkreserve ist daher umso wichtiger, je näher der Abfangflugkörper dem Luftziel kommt. Es ist daher vorteilhaft, wenn ein späterer Lenkaufwand die Bewertung mehr senkt, als der gleiche Lenkaufwand früher.

Ein hoher Lenkaufwand am Ende der Flugbahn ist somit negativer als am Anfang der Flugbahn, da am Ende noch Reserve für harte Verfolgungsbewegungen sein sollte. Auch die Sichtbarkeit kann mit dem Lenkaufwand verbunden werden. Je schlechter die Sichtbarkeit ist, desto mehr kann der Lenkaufwand bestraft werden, insbesondere der spätere Lenkaufwand.

Die Bewertung einer Flugbahn kann für die mehreren Abschnitte der Flugbahn unterschiedlich sein. Zweckmäßigerweise wird ein gleicher Lenkaufwand von Abschnitt zu Abschnitt stärker negativ bewertet, beispielsweise im ersten Abschnitt mal -1 genommen, im zweiten mal -2 und im dritten mal -4.

Jede einzelne der mehreren prädizierten Flugbahnen des Flugkörpers wird zweckmäßigerweise in einem Rechenzyklus aus vielen Rechenschritten berechnet. Jeder Rechenschritt kann die Integration von einer oder mehreren Differentialgleichungen umfassen. Die Flugbahn kann in viele Prädiktionabschnitte unterteilt sein, die jeweils mit einem Rechenschritt oder Prädiktionsschritt berechnet werden. Eine Berechnung einer Flugbahn des Flugkörpers kann insofern in mehreren Prädiktionsschritten in einem Prädiktionszyklus erfolgen, wobei eine Flugbahn in einem Prädiktionszyklus berechnet wird. Umfasst der Prädiktor auch die Flugbahn des Luftziels, kann in einem Prädiktionszyklus sowohl die Bahn des Flugkörpers als auch die Bahn des Luftziels berechnet werden oder eine Relativbahn des Flugkörpers zur Bahn des Luftziels.

Der Planungszyklus ist dem Prädiktionszyklus übergeordnet und enthält eine Vielzahl von Prädiktionszyklen. Dem Planungszyklus kann wiederum ein MPG-Zyklus (Model Predictive Guidance) übergeordnet sein, der eine Vielzahl von Planungszyklen enthält. Mit den Daten eines Planungszyklus wird ein Teilstück der realen Flugbahn abgeflogen, wobei die reale Midcourse-Flugbahn in viele Teilstücke unterteilt ist, zu denen jeweils ein Planungszyklus stattfindet. Die übergeordnete Variation der

Flugbahn des Flugkörpers kann insofern in drei ineinander liegenden Rechenzyklen erfolgen:
- der Berechnung einer Flugbahn des Flugkörpers in mehreren Prädiktionsschritten in einem Prädiktionszyklus,
- die Berechnung mehrerer Flugbahnen in einem Planungszyklus und
- die Wiederholung der Planungszyklen für mehrere Teilstücke entlang der realen Flugbahn in einem MPG-Zyklus.
Hierbei kann der MPG-Zyklus innerhalb der Midcourse-Phase liegen und insbesondere vom Beginn des Midcourse bis zum Ende des Midcourse reichen.

Es ist die real abgeflogene Flugbahn von der berechneten Flugbahn zu unterscheiden. Die reale Flugbahn ist in mehrere Teilstücke unterteilt, die sich jeweils über eine räumliche Länge erstrecken. Die Teilstücke müssen nicht gleich lang sein, sondern können sich an äußeren Gegebenheiten ausrichten, wie dem Eingang von neuen Daten über das Verhalten des Luftziels. Zu jedem Teilstück wird ein Planungszyklus ausgeführt, der eine zeitliche Dauer der Berechnung darstellt. Er kann so lang sein wie das Abfliegen eines Teilstücks oder auch kürzer. Innerhalb eines Planungszyklus oder Teilstücks liegen viele Lenkzyklen, also Berechnungen der Lenkkommandos aus der vorgegebenen, konstanten Flugbahn des aktuellen Planungszyklus. In einem Planungszyklus liegen beispielsweise 100 Lenkzyklen. Noch kürzer können Flugreglerzyklen zur Ansteuerung der Lenkflügel sein, sodass ein Lenkzyklus viele Flugreglerzyklen enthält.

Eine berechnete Flugbahn kann in mehrere Abschnitte oder Lenkabschnitte unterteilt sein, beispielsweise drei Abschnitte. Der Prädiktor enthält somit zweckmäßigerweise zu jedem der Abschnitte einen Satz an Steuergrößen, wobei jeder Satz zumindest eine Steuergröße zu jedem Steuerparameter des Prädiktors enthält. Bei drei Abschnitten der Flugbahn hat der Prädiktor beispielsweise sieben Dimensionen: 3 x 2 Dimensionen für die Querbeschleunigungen in x- und y-Richtung in den 3 Abschnitten sowie einen Zeitpunkt für den Start des zweiten Triebwerkspulses. Die Optimierung kann dann mit einem 7-dimensionalen Vektor durchgeführt werden. Die Abschnitte können gleich lang sein, sodass die noch verbleibende Flugstrecke zum Luftziel bzw. zur Annäherung in gleich lange Abschnitte unterteilt ist. Generell kann die Anzahl der Abschnitte während des realen Flugs des Flugkörpers konstant bleiben, sodass die Abschnitte von Teilstück zu Teilstück kürzer werden.

Die Prädiktionsschritte gehorchen vorteilhafterweise einer oder mehreren der folgenden Bedingungen:
- Innerhalb eines jeden Prädiktionsschritts sollte die Beschleunigung gleich sein. Auf allen Änderungen der Beschleunigung, auch bei einem Start eines Triebwerkspulses, sollte ein Prädiktionsschritt enden und ein neuer beginnen.
- Bei mehreren Lenkabschnitten sollte an jedem Abschnittsende auch der laufende Prädiktionsschritt enden.
- Die Prädiktionsschritte können verkürzt werden, wenn die Beschleunigung des Luftziels über einen Grenzwert ansteigt.
- Die Prädiktionsschritte können in Abhängigkeit von der noch verbleibenden Flugzeit oder der Entfernung zum Luftziel verkürzt werden, um beispielsweise zum Ende des Flugs hin präziser zu fliegen.

Ein Planungszyklus kann beendet werden, wenn eine Flugbahn des Flugkörpers gefunden ist, die eine ausreichende Güte aufweist, sodass die Mission des Flugkörpers genügend aussichtsreich erfolgreich durchgeführt werden kann. Das kann der Fall sein, wenn die Bewertungen einen vorbestimmten Schwellwert erreicht. Es gibt jedoch auch andere sinnvolle Abbruchkriterien, sodass es vorteilhaft ist, dass ein Planungszyklus beendet wird, wenn zumindest eines der folgenden Kriterien erreicht wird:
- Zumindest eine der Bewertungen erreicht einen vorbestimmten Schwellwert.
- Die Bewertungen laufen gegen eine Konstante. Dann ist absehbar, dass die weitere Variation der Flugbahnen nicht zu wesentlich besseren Bewertungen führt, sodass sie abgebrochen werden kann, auch wenn sie noch nicht ausreichend gut ist.
- Bei der Variation der Steuergrößen fällt der Raumabstand der Steuergrößen im Parameterraum unter einen vorbestimmten Grenzwert. Es ist dann absehbar, dass sich die Steuergrößen bei einer weiteren Variation der Flugbahnen nicht mehr sehr verändern werden, sodass die Prädizierungen abgebrochen werden können.
- Eine Maximalanzahl an Bahnen wurde berechnet. Es kann vorkommen, dass keine gute Flugbahn ermittelbar ist. Dann ist es besser, die Prädizierungen abzubrechen und von einem anderen Ausgangspunkt neu zu beginnen, als die aussichtsarme Variation der Flugbahnen länger fortzusetzen.

Nach einem Abschluss eines Planungszyklus wird ein neuer Planungszyklus entweder unmittelbar oder nach Ablauf eines Wartekriteriums begonnen. Dieser neue Planungszyklus kann als Startwerte für die Prädiktion die Steuergrößen der letzten verwendeten Flugbahn verwenden. Für den Beginn eines Planungszyklus können einer oder mehrere der folgenden Kriterien gelten:
- Der letzte Planungszyklus ist abgeschlossen.
- Ein vorbestimmter Zeitpunkt ist erreicht, beispielsweise wenn eine vorgegebene Wartezeit vergangen ist oder ein vorgegebener absoluter Zeitpunkt erreicht ist.
- Es liegen neue Zieldaten vor. Wenn das Luftziel sich anders verhalten hat, als im vergangenen Planungszyklus angenommen wurde, ist es sinnvoll, die Flugbahn zügig an das neue Zielverhalten anzupassen. Hierfür kann ein Planungszyklus begonnen werden, der die neuen Zieldaten berücksichtigt. Gegebenenfalls kann ein noch laufender Planungszyklus abgebrochen werden, damit die neuen Zieldaten zügig verarbeitet werden.
- Der Ist-Zustand des Flugkörpers weicht vom berechneten Zustand mehr als um ein vorbestimmtes Maß ab. Es kann vorkommen, dass die real gesteuerte Flugbahn von der berechneten um mehr als eine vorgegebene Toleranz abweicht. Dann kann es sinnvoll sein, einen neuen Planungszyklus mit den realen Flugdaten zu beginnen. Ggf. kann ein noch laufender Planungszyklus abgebrochen werden, um die realen Daten zügig zu berücksichtigen.

Die Erfindung ist außerdem gerichtet auf einen durch ein Triebwerk angetriebenen Abfangflugkörper mit einer Steuereinheit. Zur Lösung der auf den Flugkörper gerichteten Aufgabe ist die Steuereinheit erfindungsgemäß dazu vorbereitet, einen Flug zu einem Luftziel innerhalb einer Midcourse-Phase des Flugs zu lenken und in einem Planungszyklus
a) eine Prädiktion einer möglichen Flugbahn des Flugkörpers von seinem aktuellen Flugpunkt zum Luftziel mit einem Prädiktor zu erstellen,
b) eine zukünftige Annäherung des Flugkörpers ans Luftziel auf dieser Flugbahn anhand des Prädiktors zu bestimmen und zu bewerten, wobei in die Bewertung ein Sichtbarkeitsparameter mit einfließt, der einen Aspekt der voraussichtlichen Sichtbarkeit des Luftziels durch einen Sucher des Abfangflugkörpers angibt,
c) weitere mögliche Flugbahnen des Flugkörpers zum Luftziel zu prädizieren durch eine mehrfache Variation von Steuergrößen des Abfangflugkörpers, wobei resultierende Annäherungen des Abfangflugkörpers ans Luftziel jeweils bewertet werden, und
d) anhand der Bewertungen eine der Flugbahnen des Abfangflugkörpers auszuwählen,
sowie eine Lenkung zum Fliegen entlang eines ersten Teilstücks dieser Flugbahn zu steuern, und den Planungszyklus mehrfach für nachfolgende Teilstücke zu wiederholen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Abfangflugkörper in einem Anflug auf ein Luftziel,
- FIG 2: ein Flussdiagramm eines Verfahrens zur Bestimmung einer Flugbahn des Abfangflugkörpers zum Luftziel,
- FIG 3: die Sichtbarkeit des Luftziels während des Anflugs des Abfangflugkörpers,
- FIG 4: die Flugbahnen des Abfangflugkörpers und des Luftziels und
- FIG 5: ein Diagramm der Querbeschleunigungen des Abfangflugkörpers.

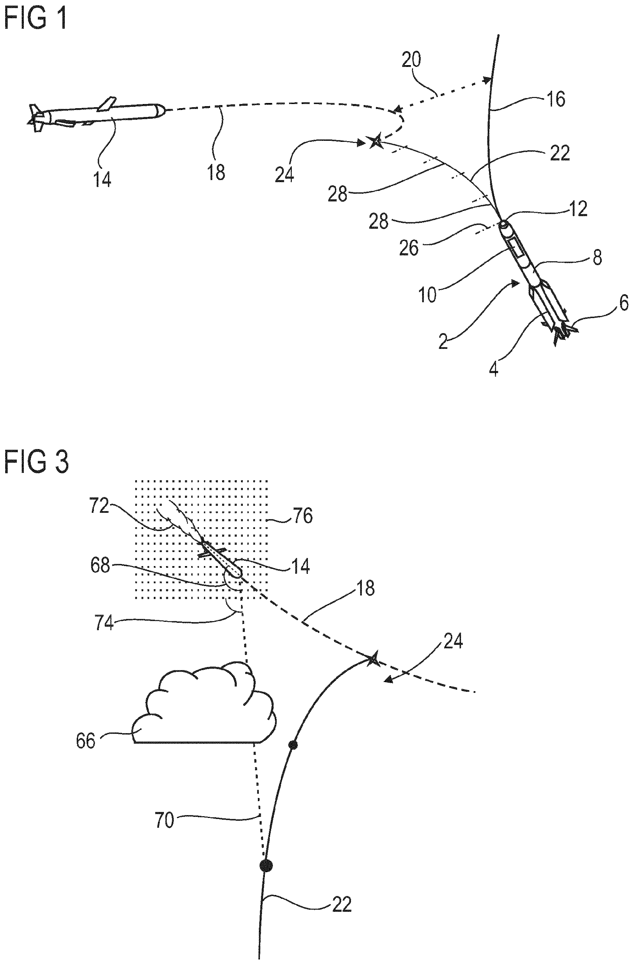

FIG 1 zeigt einen Abfangflugkörper 2 in Form eines Lenkflugkörpers mit einem als Raketenmotor ausgeführten Triebwerk 4, Lenkflügeln 6, einem Wirkkörper 8, einer Steuereinheit 10 und einem Infrarot-Suchkopf 12. Der Abfangflugkörper 2 befindet sich in einem Midcourse-Flug auf dem Weg zu einem Luftziel 14, das er abfangen soll. Das Luftziel 14 ist ein Marschflugkörper im Flug. Um das Luftziel 14 zu erreichen, ist eine angenommene Flugbahn des Luftziels 14 im Abfangflugkörper 2 hinterlegt, die beispielsweise von einer Bodenstation, wie einem Waffensystem, an den Abfangflugkörper 2 übermittelt wurde. Die Flugbahn 16 des Abfangflugkörpers 2 ist an die angenommene Flugbahn des Luftziels 14 angepasst, sodass sich Abfangflugkörper 2 und Luftziel 14 in einem Predicted Intercept Point (PIP) treffen.

Während des Midcourse-Flugs des Abfangflugkörpers 2 ändert das Luftziel 14 seinen angenommenen Kurs, um dem Abfangflugkörper 2 auszuweichen. Die Kursänderung wird analysiert, beispielsweise von der Bodenstation, und es wird angenommen, dass das Luftziel 14 auf einer neuen Flugbahn 18 eine Kurve fliegen wird, bis es Tail-on zum Abfangflugkörper 2 ausgerichtet auf einem Fluchtflug ist. Diese neue angenommene Flugbahn 18 wird dem Abfangflugkörper 2 mitgeteilt. Bei einem Weiterflug des Abfangflugkörpers 2 auf seiner Flugbahn 16 wäre der Abstand 20 zwischen Luftziel 14 und Abfangflugkörper 2 am nahesten Annäherungspunkt zu groß, um eine Bekämpfung zu ermöglichen. Daher berechnet auch der Abfangflugkörper 2 eine neue Flugbahn 22, auf der sich Luftziel 14 und Abfangflugkörper 2 mit einer für eine Bekämpfung ausreichenden Annäherung begegnen. Die Annäherung ist am Annäherungspunkt 24, an dem sich der Abfangflugkörper 2 und das Luftziel 14 am nahesten kommen.

Die Flugbahn 22 ist eine berechnete, theoretische Flugbahn 22. Sie beginnt am aktuellen Flugpunkt 26 und wird über ihre gesamte Länge berechnet, jedoch nur für ein vorderes Teilstück 28 abgeflogen. Während dieses Abfliegens wird die theoretische Flugbahn 22 neu berechnet und ein nächstes Teilstück 28 wird dann anhand der Steuergrößen der dann neuen Flugbahn 22 abgeflogen. Die real geflogene Flugbahn des Abfangflugkörpers 2 orientiert sich insofern an der berechneten Flugbahn 22, da sie mit den aus der Berechnung der Flugbahn 22 gewonnenen Steuergrößen der Lenkung des Abfangflugkörpers 2 geflogen wird. Beispielsweise sind die Steuergrößen Querbeschleunigungen. Es werden dann die Lenkflügel 6 des Abfangflugkörpers 2 so angesteuert, dass die gewünschten Querbeschleunigungen, also Steuergrößen, erreicht werden. Die reale Flugbahn muss nicht perfekt identisch mit der berechneten Flugbahn 22 sein. Die Berechnungen der Flugbahn 22 erfolgt zyklisch von Teilstück 28 zu Teilstück 28 in mehreren Durchläufen eines MPG-Zyklus (Model Predictive Guidance). Sie kann unabhängig vom oben geschilderten Szenario erfolgen.

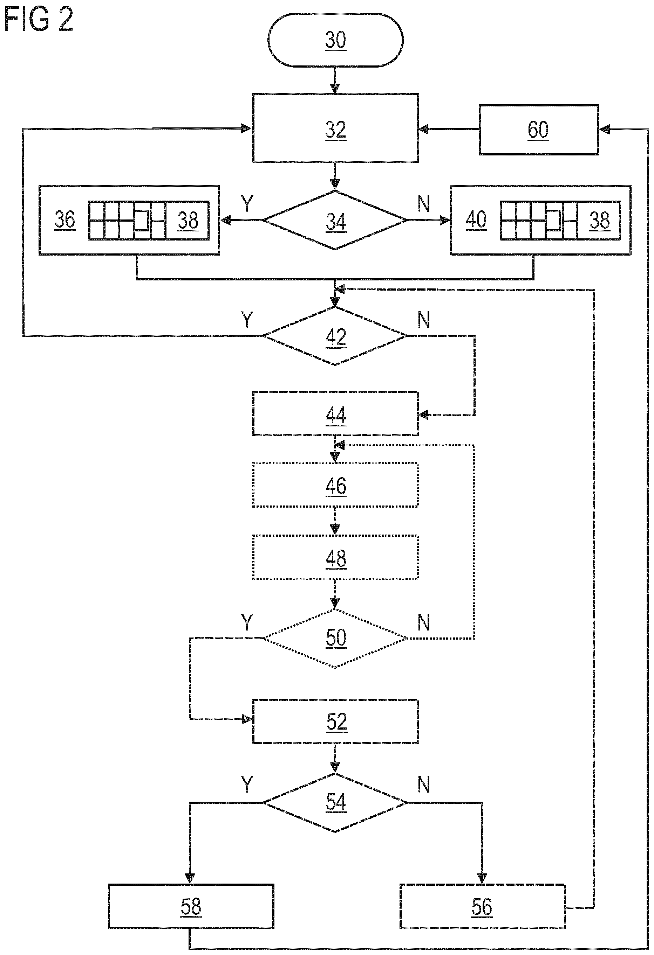

FIG 2 zeigt ein Flussdiagramm eines Verfahrens zur Bestimmung einer Flugbahn 22 des Abfangflugkörpers 2 zum Luftziel 14. Die einzelnen Schritte werden von der Steuereinheit 10 des Abfangflugkörpers 2 ausgeführt und sind im Folgenden beschrieben.

| | |
|---|---|
| 30 | Beginn des Verfahrens, Beginn des MPG-Zyklus (Model Predictive Guidance). Dieser Zyklus ist in FIG 2 in durchgezogenen Feldern und Pfeilen dargestellt. Er umschließt den Planungszyklus (gestrichelte Felder und Pfeile), der wiederum den Prädiktionszyklus (punktierte Felder und Pfeile) umschließt, und durchläuft für jedes Teilstück 28 (siehe FIG 1) der Flugbahn 22 einen Durchlauf. |
| 32 | Beginn des ersten Durchlaufs des MPG-Zyklus. Er umschließt nach initialisierenden Schritten 32 - 40 den Planungszyklus. Die initialisierenden Schritte 32 - 40 sind: |
| | a) Einlesen des Flugzustands des Luftziels 14, wie Position, Geschwindigkeit mit Flugrichtung und eventuell Beschleunigung aus Daten einer Bodenstation oder eigenen Daten, z.B. von einem Suchkopf 12, und |
| | b) Einlesen des eigenen Flugzustands aus der bordeigenen Navigationsrechnung und/oder Daten einer Bodenstation. Hierzu gehört das Einlesen der eigenen Position im Raum, denn diese bildet den aktuellen Flugpunkt 26, von dem aus eine Vielzahl von Flugbahnen 22 berechnet werden, die alle vom gleichen Flugpunkt 26 starten. Alternativ kann der aktuelle Flugpunkt 26 an das Ende des aktuellen Teilstücks 28 der Flugbahn 22 gelegt werden oder an einen Ort der Flugbahn 22, der zwischen Beginn und Ende des Teilstücks 28 liegt. |
| 34 | Abfrage: Erster MPG-Zyklus? |
| 36 | Ja: Initialisierung der Startwerte der Steuerparameter (erste Steuergrößen) zur aktiven Beeinflussung der eigenen Flugbahn 22. |
| 38 | Prädiktor mit sechs Steuergrößen der Querbeschleunigung, einer Steuergröße des Zeitpunkts des Zündens des zweiten Triebwerkspulses, dem Flugzustand des Luftziels 14 bzw. dessen Flugbahn 18 und dem eigenen Flugzustand. Der Flugzustand des Luftziels 14 ist im Prädiktor 38 nur symbolisch mit einem einzigen Feld dargestellt. Der Flugzustand des Luftziels 14 kann analog zum Abwehrflugkörper 2 mit mehreren Steuergrößen berechnet werden, sodass der Prädiktor 38 dann mehr als die dargestellten Steuergrößen enthält. |
| 40 | Nein: Übernahme der Steuergrößen aus dem letzten Durchlauf des MPG-Zyklus als Startwerte der Steuerparameter zur aktiven Beeinflussung der eigenen Flugbahn 22. In beiden Schritten 36, 40 enthält der Prädiktor 38 eine mathematische Beschreibung einer Flugbahn 22 des Abfangflugkörpers 2. In Schritt 36 eine erste, unoptimierte Flugbahn, in Schritt 40 die Flugbahn 22 des letzten Planungszyklus. Außerdem enthält der Prädiktor 38 eine mathematische Beschreibung einer Flugbahn 18 des Luftziels 14. |
| 42 | Abfrage: Liegen neue Zieldaten vor? Falls ja, werden diese im Schritt 32 eingelesen. Falls nein, beginnt der Planungszyklus. |
| 44 | Initialisierung der Prädiktion von Luftziel 14 und Abfangflugkörper 2, T_{go} = 0, die Restflugzeit wird auf Null gesetzt. |
| 46 | Berechnung der Prädiktionsschrittweite ΔT. Sie ist unten zu den FIGs 4 und 5 ausführlich beschrieben. |
| 48 | Prädiktionsschritt T_{go} := T_{go} + ΔT. In jedem Prädiktionsschritt wird die Zielbahn 18 und die Flugbahn 22 des Abfangflugkörpers 2 berechnet. Die Flugbahn 22 des Abfangflugkörpers 2 startet vom aktuellen Flugpunkt 26. Die Flugbahn 18 des Luftziels 14 wird aus den Zieldaten berechnet, also beispielsweise ob sie beschleunigt oder unbeschleunigt, ballistisch oder durch Fluchtmanöver gekennzeichnet ist. Die Flugbahn 22 des Abfangflugkörpers 2 wird anhand der Steuergrößen berechnet, wobei passive, also nicht regelbare, Effekte, wie Schub und Widerstand einbezogen werden. |
| 50 | Abfrage: Ist die naheste Annäherung 24 von Luftziel 14 und Abfangflugkörper 2 erreicht? Die Annäherung 24 kann durch die berechnete Annäherungsgeschwindigkeit beschrieben werden, fällt diese unter Null, so entfernen sich Luftziel 14 und Abfangflugkörper 2 wieder, sodass die naheste Annäherung 24 in der (berechneten) Vergangenheit liegt und bestimmt werden kann. Liegt die naheste Annäherung24 von Luftziel 14 und Abfangflugkörper 2 noch nicht vor, so springt das Verfahren zurück zu Schritt 46, in dem die |
| | Prädiktionsschrittweite ΔTdes nächsten Schritts berechnet wird und in Schritt 48 die Flugbahnen 18, 22 im nächsten Prädiktionsschritt berechnet werden. |
| 52 | Wenn die naheste Annäherung 24 von Luftziel 14 und Abfangflugkörper 2 vorliegt, so ist die Berechnung der Flugbahn 22 abgeschlossen. Nun wird ihre Güte anhand der Güte- oder Kostenfunktion bestimmt. |
| 54 | Abfrage: Ist das temporäre Güteoptimum erreicht? Ist ein Güteergebnis ausreichend, so kann die Bahn mit dem ausreichenden Güteergebnis zur Flugsteuerung verwendet werden. Ist das temporäre Güteoptimum noch nicht erreicht, so können Abbruchkriterien für den Planungszyklus geprüft werden. Liegt ein Abbruchkriterium vor, so werden die Güteergebnisse der bisher errechneten Flugbahnen 22 miteinander verglichen und die Flugbahn 22 mit dem besten Güteergebnis wird als temporäres Güteoptimum angesehen und zur Flugsteuerung verwendet. |
| 56 | Ist das temporäre Güteoptimum noch nicht erreicht, so werden die Steuergrößen variiert. Anschließend springt das Verfahren zurück zum Beginn des Planungszyklus und es wird eine neue Flugbahn 22, die vom gleichen aktuellen Flugpunkt 26 beginnt, berechnet und bewertet. Sollten sich zwischenzeitlich neue Zieldaten eingestellt haben, so werden sie über die Schritte 42 und 32 aufgenommen und der Planungszyklus beginnt von vorne. Die bisherigen Flugbahnen 22 des bisherigen Planungszyklus werden verworfen, da deren Güten sich noch auf die alten Zieldaten beziehen und nicht mehr korrekt sind. Dies ist in FIG 1 beispielhaft dargestellt. Die alte Flugbahn 16 ist nicht mehr aktuell, da sich die Flugbahn 18 des Ziels 14 geändert hat. |
| 58 | Ist das temporäre Güteoptimum erreicht, so ist der Planungszyklus beendet. Die Flugbahn 22 mit dem Güteoptimum wird als Grundlage zur Flugsteuerung herangezogen. Das heißt, dass die zu Berechnung dieser Flugbahn 22 verwendeten Steuergrößen nun zur Steuerung bzw. Lenkung des realen Flugs verwendet werden. Der Abfangflugkörper wird entlang dieses Teilstücks 28 der Flugbahn 22 gesteuert, wobei während dieses Flugs der nächste Planungszyklus für das nachfolgende Teilstück 28 begonnen wird. Hierfür springt das Verfahren über Schritt 60 zurück zu Schritt 32. |
| 60 | Der Schritt 60 zuvor dient dazu, eventuell eine vorgegebene Zeit zu warten, bis der neue Planungszyklus beginnt. |
| 32 | Es beginnt der zweite Durchlauf des MPG-Zyklus. Es wird der Flugzustand von Luftziel 14 und Abfangflugkörper 2 aktualisiert und über die Abfrage 34 in Schritt 40 der Prädiktor 38 aktualisiert, wobei dieser die optimierten Steuergrößen aus dem letzten Planungszyklus erhält. |

In Schritt 52 wird die Güte der Flugbahn 22 bestimmt, die Flugbahn 22 wird bewertet. Dies kann unter Verwendung von einem oder mehreren Gütekriterien erfolgen. Eines der Gütekriterien ist der naheste Abstand des Abfangflugkörpers 2 zum Luftziel 14 im Annäherungspunkt 24, also dem Punkt der Flugbahn 22, an dem der Abstand zwischen Abfangflugkörper 2 und Luftziel 14 am geringsten ist. Je kleiner der Abstand ist, desto höher ist die Bewertung oder Güte. Ein weiteres Gütekriterium ist die Flugzeit vom aktuellen Flugpunkt 26 zum Annäherungspunkt 24. Je kleiner die Flugzeit ist, desto höher ist die Bewertung oder Güte. Auch die Fluggeschwindigkeit des Abfangflugkörpers 2 im Annäherungspunkt 24 ist ein Gütekriterium, da eine hohe Geschwindigkeit die Zuverlässigkeit, das Luftziel 14 zu treffen oder ihm auch bei Fluchtbewegungen ausreichend nahe zu kommen, erhöht. Weiter ist die Begegnungsgeometrie von Abfangflugkörper 2 und Luftziel 14 am Annäherungspunkt 24 von Bedeutung. Je nach Annäherungsgeometrie ist eine Verfolgung des Luftziels 14 einfacher oder schwieriger. Auch kann das Einhalten einer vorbestimmten Gipfelhöhe wichtig sein, um unter einem Radar zu bleiben. Ein weiteres Gütekriterium ist ein Lenkaufwand des Abfangflugkörpers 2 entlang seiner Flugbahn. Je geringer der Lenkaufwand ist, desto mehr Lenkreserve steht dem Abfangflugkörper 2 zur Verfolgung eines flüchtenden Luftziels 14 zur Verfügung, sodass das Erreichen eines geringen Bekämpfungsabstands zuverlässiger ist. Da die Lenkreserve eher am Ende der Flugbahn 22 wichtig ist, kann ein späterer Lenkaufwand die Bewertung mehr senken, als der gleiche Lenkaufwand früher.

Ein weiteres Gütekriterium ist die Sichtbarkeit des Luftziels 14 vom Sucher 12 des Abfangflugkörpers 2 aus. Dieses Gütekriterium ist in FIG 3 näher erläutert.

FIG 3 zeigt eine berechnete, zukünftige Annäherung 24 des Abfangflugkörpers 2 ans Luftziel 14. Während der Annäherung 24, die in den FIGs 1 und 3 durch den Punkt der nächsten Annäherung 24 nur angedeutet ist, ist das Luftziel 14 vom Sucher 12 des Abfangflugkörpers 2 aus verschieden Gründen gut sichtbar. Zeitweise wird das Luftziel 14 beispielsweise durch Wolken 66 verdeckt, sodass es mit dem IR-Sucher 12 nicht ausreichend gut erkennbar ist, um das Luftziel 14 zu erfassen. Es gibt jedoch auch andere Kriterien, die sinnvollerweise als Sichtbarkeitsparameter in die Bewertung mit eingehen. Jeder der Kriterien kann einen Aspekt der voraussichtlichen Sichtbarkeit des Luftziels 14 durch den Sucher 12 des Abfangflugkörpers 2 angeben. Der Sichtbarkeitsparameter kann einen oder mehrere dieser Kriterien umfassen. Die Kriterien können als einzelne Sichtbarkeitsparameter oder gemeinsam in einem Sichtbarkeitsparameter bewertet werden.

Ein Kriterium ist ein Winkel 68 zwischen der Sichtlinie 70 vom Flugkörper 2 zum Luftziel 14 und der Flugachse oder Flugrichtung des Luftziels 14. Wie in FIG 3 angedeutet ist, ist das Luftziel 14 angetrieben und stößt nach hinten einen Triebwerksstrahl 72 aus. Dieser bietet eine starke Infrarotsignatur, die von weitem durch den IR-Sucher 12 erfasst werden kann. Diese Signatur ist umso besser aus der Ferne erkennbar, je mehr quer das Luftziel 14 zur Sichtlinie 70 fliegt. Ganz grob angenähert verhält sich dieses Signatur wie der Sinus des Winkels 68 von 0° bis 90°, wenn der Triebwerksstrahl von vorne gesehen vollständig von der Silhouette des Luftziels 14 verdeckt werden würde. Es ist daher sinnvoll, wenn der Abfangflugkörper 2 nicht direkt auf das Luftziel 14 zufliegt, sondern zumindest etwas von der Seite anfliegt. Entsprechend der erwarteten IR-Signatur des Triebwerksstrahls 72 bzw. des Luftziels 14 insgesamt wird die Sichtrichtung bzw. der Winkel 68 bewertet.

Die Bewertung des Sichtbarkeitsparameters ist über den realen Flug des Abfangflugkörpers 2 zum Luftziel 14 nicht immer gleich wichtig. Ist der Abfangflugkörper 2 real noch so weit vom Luftziel 14 entfernt, dass der Sucher 12 das Luftziel 14 nicht erfassen kann, egal wie gut das Luftziel 14 sichtbar ist, so wird die Bewertung des Sichtbarkeitsparameters geringer gewichtet, als in einem Teilstück 28 der Flugbahn 22, in dem der Sucher 12 das Luftziel 14 erkennen sollte. Der reale Abstand vom Abfangflugkörper 2 zum Luftziel 14 ist also ein wichtiges Kriterium für die Bewertung des Sichtbarkeitsparameters. Es kann ein Abstandsband oder Bahnabschnitt gewählt werden, in dem die Bewertung vorgenommen wird, wobei die Bewertung des Sichtbarkeitsparameters vorher geringer gewichtet oder nicht in die Gesamtbewertung der Annäherung 24 einbezogen wird. Mit gleichem Vorteil kann die Gewichtung der Bewertung des Sichtbarkeitsparameters im Laufe des Midcourse-Flugs erhöht werden.

Auch der Typ des Luftziels 14 in Bezug zur Sichtbarkeit dieses Typs ist ein bedeutendes Kriterium im Sichtbarkeitsparameter. Fliegt das Luftziel 14 unangetrieben, ist kein Triebwerksstrahl 72 vorhanden, sodass die Sichtbarkeit von einer optischen Sichtbarkeit und/oder einer IR-Sichtbarkeit eines Bauteils des Luftziels 14 abhängen kann. Bei einem schnellen Luftziel kann sich die Flugkörperspitze durch die Luftreibung stark erhitzen, sodass der Sucher 12 diese als erstes erkennt. Bei der Bewertung wird also berücksichtigt, welcher Typ das Luftziel 14 ist bzw. an welcher Signatur dieser Typ vom Sucher 12 voraussichtlich erkannt wird.

Zusätzlich zum Winkel 68 zwischen der Sichtlinie 70 und dem Luftziel 14 ist die Sichtrichtung 74 des Abfangflugkörpers 2 auf das Luftziel 14 ein wichtiges Kriterium im Sichtbarkeitsparameter. Die Sichtrichtung 74 kann eine absolute Sichtrichtung 74 sein, wie ein Winkel zwischen der Sichtlinie 70 und einer geostationäre Ausrichtung, wie eine Erdsenkrechte oder eine erdwaagerechte Fläche, beschrieben werden. Denn ob das Luftziel 14 gut oder weniger gut erkannt wird, kann auch davon abhängen, ob das Luftziel 14 von oben oder von unten angeflogen wird. In FIG 3 ist diese Sichtrichtung 74 als ein Winkel zwischen der Sichtlinie 70 und einem Bildhintergrund 76 dargestellt, der in FIG 3 durch eine punktierte Fläche hinter dem Luftziel 14 angedeutet ist, und der eine Erdwaagerechte sein kann. Bei einem Anflug von oben kann der Bildhintergrund 76 am Boden die Zielerkennung erschweren, wohingegen eine Erkennung gegen einen blauen Himmel hinter dem Luftziel 14 deutlich einfacher sein kann. Beispielsweise kann ein heißer Wüsten- oder Felderhintergrund durch seine stark gekörnte optische und/oder IR-Signatur die Erkennung stark stören.

Mit gleichem Vorteil kann der Sichtbarkeitsparameter einen Bildhintergrund 76 hinter dem Luftziel 14 aus Sicht des Abfangflugkörpers 2 umfassen. Dieser oder eine für die Sichtbarkeit wichtige Charakteristik davon kann aus einer Bodenaufnahme, ggf. in Verbindung mit einem Temperatur- und/oder Tageszeitparameter, gewonnen werden.

Weiter können ein Wetterparameter und/oder ein Wolkenparameter für die Sichtbarkeit von Bedeutung sein, ebenso wie ein Tageszeit- und/oder Temperaturparameter. Nachts wird eine IR-Signatur besser zu sehen sein, als in flirrender Mittagshitze eines Bildhintergrunds 76. Wolken 66, Nebel, hohe Luftfeuchtigkeit, wie bei Sommerdunst, Regen, Schnee und andere Witterungsparameter können berücksichtigt werden.

Je früher der Sucher 12 das Luftziel 14 als solches erfassen kann, desto besser, da ein suchergesteuerter Anflug zum Luftziel 14 zuverlässiger als ein nur berechneter Anflug sein kann. Insofern ist es zweckmäßig, wenn der Sichtbarkeitsparameter den Abstand zwischen Abfangflugkörper 2 und Luftziel 14 umfasst, ab dem der Sucher 12 voraussichtlich in der Lage ist, das Luftziel 14 als solches zu erfassen. In diesen Abstand kann einer oder mehrere der oben genannten Kriterien mit eingehen bzw. diesen beeinflussen. Es sollte also eine solche Flugbahn 22 besser bewertet werden, in denen die Sichtbarkeitsparameter so sind, dass der Abstand, ab dem das Luftziel 14 sichtbar ist, größer ist, als bei einer anderen Flugbahn 22, bei dem der Abstand kleiner ist.

Beim Erfassen des Luftziels 14 durch den Sucher 12 kann es zu Fehlern kommen, die den Flug des Abfangflugkörpers 2 durch eine Fehllenkung empfindlich stören können. Es ist daher wichtig zu wissen, ab wann der Sucher 12 das Luftziel 14 voraussichtlich erfassen kann. In FIG 3 ist dargestellt, dass an einem Punkt der Flugbahn 22, an dem der Abstand zum Luftziel 14 an sich so gering ist, dass eine Erfassung des Luftziels 14 möglich sein sollte, eine Wolke 66 die Sicht verstellt, also die Sichtlinie 70 unterbricht. Insofern kann ein zeitlicher oder räumlicher Erfassungsabschnitt der Flugbahn 22 ermittelt werden, in dem die Erfassung voraussichtlich erfolgreich sein wird. Nun kann dem Sucher 12 vorgegeben werden, dass das Luftziel 14 nur in diesem Erfassungsabschnitt erfasst werden soll. Die Lage dieses Abschnitts kann vom Sichtbarkeitsparameter abhängig gemacht werden. In FIG 3 ist die Stelle, ab dem der Sucher 12 das Luftziel 14 voraussichtlich erfassen kann, mit einem kleineren Punkt markiert. Dieser Punkt kann den Beginn des Erfassungsabschnitts der Flugbahn 22 markieren, ab dem der Sucher 12 das Luftziel 14 erfassen darf.

In FIG 3 ist die Sichtbarkeit des Luftziels 14 anhand der Wolke 66 nur beispielhaft dargestellt, da das Unterbrechen der Sichtlinie 70 durch eine Wolke 66 einfach bildlich gezeigt werden kann. Es ist jedoch deutlich, dass auch die anderen beschriebenen Kriterien ebenfalls in erheblichem Umfang Einfluss auf die Sichtbarkeit des Luftziels 14 haben können. Das Optimieren der Flugbahn 22 dergestalt, dass die Sichtbarkeit des Luftziels 14 möglichst früh möglichst gut ist, ist daher sehr vorteilhaft. Denn je sichtbarer das Luftziel 14 ist, desto robuster ist die Zielerfassung. Außerdem kann die Zielerfassung früher erfolgen, was die Lenkung des Abfangflugkörpers 2 zum Luftziel 14 robuster macht.

Mit gleichem Vorteil kann eine Bedingung des Aufschaltens des Suchers 12 des Abfangflugkörpers 2 auf das Luftziel 14 von der Bewertung des Sichtbarkeitsparameters abhängig gemacht werden. Ist die Bewertung gut, so kann das Aufschalten früher erfolgen. Die Bedingung kann beispielsweise sein, dass eine vorbestimmte Güte der Sichtbarkeit erreicht sein muss, bevor der Sucher 12 auf das Luftziel aufschaltet, also den Versuch unternimmt, dieses zu erfassen, oder erst dann die Erlaubnis bekommt, das Luftziel 14 zu erfassen, wie dies in FIG 3 beispielhaft mit dem kleineren Punkt auf der Flugbahn 22 dargestellt ist.

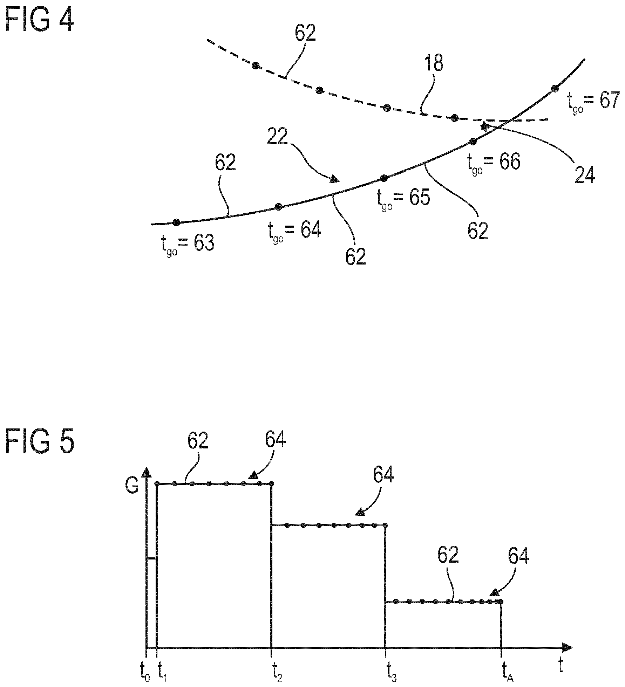

FIG 4 zeigt jeweils einen Endteil der berechneten Flugbahnen 18 und 22. Der Prädiktionszyklus hat bei T_{go} = 0 begonnen, wobei bei jedem Prädiktionsschritt 62 T_{go} um 1 bzw. ΔT hochgesetzt wird. Auf diese Weise nähern sich die beiden Flugbahnen 18, 22 bzw. der Abfangflugkörper 2 und das Luftziel 14 aneinander an bis sie während des 66sten Prädiktionsschritts 62 die nahesten Annäherung 24 erfahren. Zu Beginn des 67sten Prädiktionsschritts 62 hat sich der Abstand wieder vergrößert, die Annäherungsgeschwindigkeit wird negativ und die Schleife des Prädiktionszyklus kann im Schritt 50 beendet werden. Die naheste Annäherung 24 wird bestimmt und die Annäherung 24 wird bewertet. In die Annäherung 24 geht auch die Restflugzeit vom aktuellen Flugpunkt 26 bis zur Annäherung 24 mit ein, die im vorliegenden Beispiel etwas mehr als 66 Prädiktionsschritte 62, also Zeitschritte, beträgt.

Die Flugbahn 18 des Luftziels 14 wird analog zur Flugbahn 22 des Abfangflugkörpers 2 bestimmt, wie anhand der Punkte auf der Flugbahn 18 angedeutet ist. Auch hier sind die gleichen Prädiktionsschritte 62 gezeigt, wobei auf deren gleicher Beschriftung wie bei der Flugbahn 22 der Übersichtlichkeit halber verzichtet wurde. Im Unterschied zur Flugbahn 22 wird die Flugbahn 18 nicht variiert, bleibt also immer gleich, bis sich die Zieldaten ändern und die Flugbahn 18 entsprechend angepasst wird. Die Flugbahn 18 des Luftziels 14 muss keine konkrete Bahn sein, sie kann auch eine aus mehreren möglichen Bahnen abgeleitete theoretische Flugbahn 18 sein, wie eine mittlere Flugbahn 18. Auch ist es möglich, dass mehrere Flugbahnen 18 des Luftziels 14 in den Prädiktor 38 eingehen. Es kann beispielsweise vorteilhaft sein, dass mehrere angenommene Flugbahnen 18 des Luftziels 14 bestimmt werden und in die Bewertung mit eingeht, wie lange der Abfangflugkörper 2 das Luftziel 14 auf allen diesen Flugbahnen 18 erreichen kann. In der Bewertung kann dann von Flugbahn 18 zu Flugbahn 18 bestimmt werden, wie lange die jeweilige Flugbahn 18 noch für den Abfangflugkörper 2 erreichbar ist.

FIG 5 zeigt ein Diagramm der Querbeschleunigung G des Abfangflugkörpers 2 über der Zeit. Jede berechnete Flugbahn 22 wird in mehrere Abschnitte 64 eingeteilt, im gezeigten Beispiel drei Abschnitte 64. Die Abschnitte 64 können gleich lang sein. t₀ gibt den aktuellen Zeitpunkt an, während dem die Berechnung stattfindet. Für den Fall, dass der aktuelle Flugpunkt 26 eine kleine Zeitdauer in der Zukunft liegt, gibt t₁ den Zeitpunkt an, an dem der Abfangflugkörper 2 den aktuellen Flugpunkt 26 erreicht. Von diesem Zeit- bzw. Ortspunkt werden alle Flugbahnen 22 berechnet. Es kann der Beginn eines Teilstücks 28 der Flugbahn 22 sein. Die Zeitpunkte t₂, t₃ und t_{A} markieren jeweils das Ende der drei Abschnitte 64. Zum Zeitpunkt t_{A} ist die naheste Annäherung 24 - vermutlich - erreicht, wobei sich das erst im Laufe der Prädiktion, also der Berechnung der Flugbahn 22, herausstellt.

Während eines jeden der Abschnitte 64 ist die Querbeschleunigung G des Abfangflugkörpers 2 in beide Raumrichtungen konstant. In FIG 3 ist nur eine der beiden Querbeschleunigungen G gezeigt, beispielsweise in y-Richtung, die entlang der drei Abschnitte 64 drei freie, also wählbare, Steuergrößen ergibt. Der Abfangflugkörper 2 fliegt also eine Flugbahn 22 aus drei in etwa gleich langen Abschnitten 64, und in jedem der Abschnitte 64 fliegt er einen Kreisbahnabschnitt. Die Querbeschleunigungen G sind hierbei so gewählt - oder ergeben sich aus der Kostenfunktion - dass sie im Laufe des Flugs abnehmen, wie in FIG 4 gezeigt ist, der Lenkaufwand also abnimmt, sodass am Ende des Flugs noch ein möglichst großer Spielraum für die Verfolgung von intensiven Ausweichmanövern verbleibt.

Die Länge der Prädiktionsschritte 62 wird in Schritt 46 festgelegt. Sie kann für jeden Prädiktionsschritt 62 individuell festgelegt werden. Hierbei kann eines oder mehrere der folgenden Kriterien herangezogen werden:
- alle Steuergrößen sollen während eines Prädiktionsschritts 62 gleich bleiben, sie sollen sich also nur von einem zum nächsten Prädiktionsschritt 62 verändern. Auf den Zeitpunkt einer Größenveränderung wird ein Prädiktionsschritt 62 gelegt.
- An den Zeitpunkt des Verlöschens oder Zündens eines Triebwerkspulses wird ein Prädiktionsschritt 62 gelegt.
- Ändert sich ein Manöver des Luftziels 14, so wird an den Zeitpunkt der Änderung ein Prädiktionsschritt 62 gelegt.
- Die Schrittweite ΔT wird umgekehrt proportional zu einer Manöverstärke/Beschleunigung des Luftziels 14 gewählt.
- Ändert sich ein Lenkmanöver des Abfangflugkörpers 2, so wird ein Prädiktionsschritt 62 auf den Zeitpunkt der Änderung gelegt.
- Die Schrittweite ΔT nimmt mit einem Abstand des Abfangflugkörpers 2 zum Luftziel 14 ab. Beispielsweise wird sie proportional zum Abstand des Abfangflugkörpers 2 zum Luftziel 14 gewählt.

Reicht beispielsweise einer der Prädiktionsschritte 62 über einen Abschnitt 64 hinaus, so würde sich während des Prädiktionsschritts 62 die Steuergröße ändern, vermutlich beide Steuergrößen und ggf. auch die Steuergröße des Starts des zweiten Triebwerkspulses. Dies würde die Integration des Prädiktionsschritts 62 erheblich stören. Daher wird der letzte Prädiktionsschritt 62 am Ende eines jeden Abschnitts 64 am Abschnittsende abgebrochen, sodass der nächstfolgende Prädiktionsschritt 62 mit dem neuen Abschnitt 64 beginnt. Hier ist dann der Prädiktionsschritt 62 kürzer als die Länge ΔT zuvor.

Alternativ zu den über einen Abschnitt 64 konstanten Steuergrößen können die Steuergrößen Funktionen über die Zeit bilden. Die Steuergrößen sind nicht konstant, sondern können von Prädiktionsschritt 62 zu Prädiktionsschritt 62 schrittweise verändert werden oder sogar kontinuierlich verändert werden, sodass die Prädiktionsschritte 62 jeweils veränderliche Querbeschleunigungen G aufweisen. Die Funktionen können von Abschnitt 64 zu Abschnitt 64 variiert werden.

Die Anzahl der Abschnitte 64 bleibt während des realen Flugs des Abfangflugkörpers 2 zum Luftziel 14 bzw. zur Annäherung 24 zweckmäßigerweise konstant. Auf diese Weise werden die Abschnitte 64 von Teilstück 28 zu Teilstück 28 immer kürzer, was zu einer immer höheren Flexibilität der Trajektorie des Abfangflugkörpers 2 im Laufe seines Flugs führt.

In Schritt 56 werden die Steuergrößen variiert. Das geschieht unter Nutzung eines Suchverfahrens zur numerischen Parameteroptimierung, z.B. mittels Gauß-Seidel, Newton o.ä. Besonders vorteilhaft ist ein Simplexverfahren, wie nach Nelder-Mead.

In Schritt 54 findet die Abfrage statt, ob das temporäre Güteoptimum erreicht ist. Mit Erreichen des Güteoptimums kann der aktuelle Planungszyklus beendet werden. Das Güteoptimum muss kein absolutes Optimum sein, ein temporäre Optimum ist ausreichend, also die beste zur Verfügung stehende Flugbahn 22. Das Güteoptimum kann als erreicht angesehen werden, wenn zumindest eine der Bewertungen einen vorbestimmten Güteschwellwert erreicht. Dies kann das Hauptkriterium sein, dem folgende weitere Kriterien untergeordnet sind. Wenn die Bewertungen beispielsweise gegen eine Konstante laufen, ist deutlich, dass eine weitere Variation der Flugbahnen 22 vermutlich nicht zu einer deutlichen Vergrößerung der Güte führen wird. Die Prädiktion kann abgebrochen und der Planungszyklus kann beendet werden. Auch wenn bei der Variation der Steuergrößen der Raumabstand der Steuergrößen im Parameterraum unter einen vorbestimmten Grenzwert fällt, hat die Prädiktion ihre Grenzen erreicht und kann abgebrochen werden. Ist schließlich keines der obigen Kriterien erreicht, so kann als letztes Kriterium eine Maximalanzahl an berechneten Flugbahnen 22 den Planungszyklus beenden. Die Flugbahn kann mit Beginn des nächsten Teilstücks 28 verbessert werden.

Normalerweise wird ein neuer Planungszyklus begonnen, wenn der letzte Planungszyklus abgeschlossen ist. Es kann jedoch vorkommen, dass andere Kriterien zum Beginn eines neuen Planungszyklus vorteilhafter sind. Ist beispielsweise sehr schnell eine optimale Flugbahn 22 gefunden, kann mit dem Beginn eines Planungszyklus eine Weile gewartet werden (Schritt 60), z.B. bis ein vorbestimmter Zeitpunkt erreicht ist oder eine Wartezeit vergangen ist. Wenn neue Zieldaten vorliegen, ist es ebenfalls vorteilhaft, einen neuen Planungszyklus zu beginnen. Entweder wird der noch laufende Planungszyklus abgebrochen und dessen Ergebnisse verworfen, wie zu Schritt 42 beschrieben ist, oder die Wartezeit in Schritt 60 wird vorzeitig beendet.

### Bezugszeichenliste

- 2: Abfangflugkörper
- 4: Triebwerk
- 6: Lenkflügel
- 8: Wirkkörper
- 10: Steuereinheit
- 12: Infrarot-Suchkopf
- 14: Luftziel
- 16: Flugbahn
- 18: Flugbahn
- 20: Abstand
- 22: Flugbahn
- 24: Annäherung
- 26: Aktueller Flugpunkt
- 28: Teilstück
- 30: Beginn des Verfahrens
- 32: Beginn des MPG-Zyklus
- 34: Abfrage: Erster MPG-Zyklus?
- 36: Initialisierung der Steuergrößen
- 38: Prädiktor
- 40: Übernahme der Steuergrößen
- 42: Abfrage: Liegen neue Zieldaten vor?
- 44: Initialisierung der Prädiktion
- 46: Berechnung der Prädiktionsschrittweite
- 48: Setzen eines neuen Prädiktionsschritts
- 50: Abfrage: Naheste Annäherung erreicht?
- 52: Berechnung der Gütefunktion
- 54: Abfrage: Temporäres Güteoptimum erreicht?
- 56: Variationen der Steuergrößen
- 58: Planungszyklus beendet. Steuergrößen übernehmen
- 60: Wartezeit
- 62: Prädiktionsschritt
- 64: Abschnitt
- 66: Wolke
- 68: Winkel
- 70: Sichtlinie
- 72: Triebwerksstrahl
- 74: Sichtrichtung
- 76: Bildhintergrund
- G: Querbeschleunigung
- T_{go}: Restflugzeit
- ΔT: Prädiktionsschrittweite

## Patentansprüche

1. Verfahren zum Lenken eines durch ein Triebwerk (4) angetriebenen lenkfähigen Abfangflugkörpers (2) zum Abfangen eines manövrierfähigen Luftziels (14) innerhalb einer Midcourse-Phase des Abfangens, bei dem in einem Planungszyklus
a) eine Prädiktion einer möglichen Flugbahn (22) des Abfangflugkörpers (2) zum Luftziel (14) mit einem Prädiktor (38) erstellt wird,
b) eine zukünftige Annäherung (24) des Abfangflugkörpers (2) ans Luftziel (14) auf dieser Flugbahn (22) anhand des Prädiktors (38) bestimmt und bewertet (52) wird, wobei in die Bewertung ein Sichtbarkeitsparameter mit einfließt, der einen Aspekt der voraussichtlichen Sichtbarkeit des Luftziels (14) durch einen Sucher (12) des Abfangflugkörpers (2) angibt,
c) weitere Prädiktionen möglicher Flugbahnen (22) des Abfangflugkörpers (2) zum Luftziel (14) berechnet werden durch mehrfache Variationen (56) von Steuergrößen des Abfangflugkörpers (2), wobei die resultierenden Annäherungen (24) des Abfangflugkörpers (2) ans Luftziel (14) jeweils bewertet werden, und
d) anhand der Bewertungen eine der Flugbahnen (22) des Abfangflugkörpers (2) ausgewählt wird, und
ein erstes Teilstück (28) dieser Flugbahn (22) abgeflogen wird und der Planungszyklus mehrfach für nachfolgende Teilstücke (28) wiederholt wird.

2. Verfahren nach Anspruch 1,
**dadurch gekennzeichnet,**
**dass** der Sichtbarkeitsparameter den Abstand zwischen Abfangflugkörper (2) und Luftziel (14) umfasst, ab dem der Sucher (12) voraussichtlich in der Lage ist, das Luftziel (14) als solches zu erfassen.

3. Verfahren nach Anspruch 1 oder 2,
**dadurch gekennzeichnet,**
**dass** der Sichtbarkeitsparameter einen Winkel (68) zwischen dem Luftziel (14) und der Sichtlinie (70) vom Abfangflugkörper (2) zum Luftziel (14) umfasst.

4. Verfahren nach Anspruch 3,
**dadurch gekennzeichnet,**
**dass** der Winkel (68) einen Mindestwinkel nicht unterschreiten darf.

5. Verfahren nach einem der vorhergehenden Ansprüche,
**dadurch gekennzeichnet,**
**dass** der Sichtbarkeitsparameter den Typ des Luftziels (14) in Bezug zur Sichtbarkeit dieses Typs umfasst.

6. Verfahren nach einem der vorhergehenden Ansprüche,
**dadurch gekennzeichnet,**
**dass** der Sichtbarkeitsparameter die Sichtrichtung (74) des Abfangflugkörpers (2) auf das Luftziel (14) umfasst.

7. Verfahren nach einem der vorhergehenden Ansprüche,
**dadurch gekennzeichnet,**
**dass** der Sichtbarkeitsparameter einen Bildhintergrund (76) hinter dem Luftziel (14) aus Sicht des Abfangflugkörpers (2) umfasst.

8. Verfahren nach einem der vorhergehenden Ansprüche,
**dadurch gekennzeichnet,**
**dass** der Sichtbarkeitsparameter ein Wetterparameter und/oder ein Wolkenparameter ist.

9. Verfahren nach einem der vorhergehenden Ansprüche,
**dadurch gekennzeichnet,**
**dass** der Sichtbarkeitsparameter ein Tageszeit- und/oder Temperaturparameter ist.

10. Verfahren nach einem der vorhergehenden Ansprüche,
**dadurch gekennzeichnet,**
**dass** eine Bedingung des Aufschaltens des Suchers (12) des Abfangflugkörpers (2) auf das Luftziel (14) von der Bewertung des Sichtbarkeitsparameters abhängig gemacht wird.

11. Verfahren nach einem der vorhergehenden Ansprüche,
**dadurch gekennzeichnet,**
**dass** die Gewichtung der Bewertung des Sichtbarkeitsparameters im Laufe des Midcourse-Flugs erhöht wird.

12. Verfahren nach einem der vorhergehenden Ansprüche,
**dadurch gekennzeichnet,**
**dass** mehrere angenommene Flugbahnen (18) des Luftziels (14) bestimmt werden und der Sichtbarkeitsparameter eine Sichtbarkeit des Luftziels (14) in mehreren Annäherungsgebieten umfasst.

13. Verfahren nach einem der vorhergehenden Ansprüche,
**dadurch gekennzeichnet,**
**dass** die Bewertung unter Verwendung von einem oder mehreren der folgenden weiteren Gütekriterien durchgeführt wird:
- nächster Abstand des Abfangflugkörpers (2) zum Luftziel (14),
- die Flugzeit vom aktuellen Flugpunkt (26) zu einem Annäherungspunkt (24),
- die Fluggeschwindigkeit des Abfangflugkörpers (2) im Annäherungspunkt (24),
- die Begegnungsgeometrie von Abfangflugkörper (2) und Luftziel (14) im Annäherungspunkt (24),
- das Einhalten einer vorbestimmten Gipfelhöhe.

14. Verfahren nach einem der vorhergehenden Ansprüche,
**dadurch gekennzeichnet,**
**dass** in die Bewertung ein Lenkaufwand des Abfangflugkörpers (2) entlang seiner Flugbahn (22) eingeht.

15. Durch ein Triebwerk (4) angetriebener Abfangflugkörper (2) mit einer Steuereinheit (10), die dazu vorbereitet ist, einen Flug zu einem Luftziel (14) innerhalb einer Midcourse-Phase des Flugs zu lenken und in einem Planungszyklus
a) eine Prädiktion einer möglichen Flugbahn (22) des Abfangflugkörpers (2) von seinem aktuellen Flugpunkt (26) zum Luftziel (14) mit einem Prädiktor (38) zu erstellen,
b) eine zukünftige Annäherung (24) des Abfangflugkörpers (2) ans Luftziel (14) auf dieser Flugbahn (22) anhand des Prädiktors (38) zu bestimmen und zu bewerten (52), wobei in die Bewertung ein Sichtbarkeitsparameter mit einfließt, der einen Aspekt der voraussichtlichen Sichtbarkeit des Luftziels (14) durch einen Sucher (12) des Abfangflugkörpers (2) angibt,
c) weitere mögliche Flugbahnen (22) des Abfangflugkörpers (2) zum Luftziel (14) zu prädizieren durch eine mehrfache Variation (56) von Steuergrößen des Abfangflugkörpers (2), wobei resultierende Annäherungen (24) des Abfangflugkörpers (2) ans Luftziel (14) jeweils bewertet (52) werden, und
d) anhand der Bewertungen eine der Flugbahnen (22) des Abfangflugkörpers (2) auszuwählen,
sowie eine Lenkung zum Fliegen entlang eines ersten Teilstücks (28) dieser Flugbahn (22) zu steuern, und den Planungszyklus mehrfach für nachfolgende Teilstücke (28) zu wiederholen.
